# EUROPEAN PATENT SPECIFICATION

(11) **EP 2 573 891 B1**
(45) Date of publication and mention of the grant of the patent: **30.10.2024**
(21) Application number: 12184106.8
(22) Date of filing: 12.09.2012
(51) Int. Cl.: H02H 7/06, H02H 9/04, H02P 9/10, H02J 7/14

(54) **Overvoltage protection using a link current sensor**
Überspannungsschutz mit Verwendung eines Verbindungsstromsensors
Protection de surtensions au moyen d'un capteur de courant de liaison

(30) Priority: 23.09.2011 US 201113241996
(43) Date of publication of application: 27.03.2013
(73) Proprietor: Hamilton Sundstrand Corporation, Charlotte, NC 28217 (US)
(72) Inventor: Sagona, John Duward, Poplar Grove, IL Illinois 61065 (US)
(74) Representative: Dehns

(56) References cited:
- WO-A1-92/17930
- DE-A1- 102008 049 705
- US-A- 5 285 344
- US-A- 5 734 256
- US-A1- 2011 215 772

## Description

### BACKGROUND

This disclosure relates to electrical power generation and, more particularly, to overvoltage protection in an electrical power generation system.

Electrical power generating systems are well known. Electrical power generating systems produce electrical energy for various loads. Some electrical power generating systems generate power using a generator. In aircraft electrical power generating systems, variable frequency generators are often used to supply power. Turbine engines drive the variable frequency generators.

Under some conditions, an electrical power generating system may experience an overvoltage (or voltage spike). The overvoltage can damage components powered by the electrical power generating system. Example conditions that may cause the overvoltage include suddenly removing a load or an arc fault. There are many strategies for limiting or containing overvoltages, but desirable overvoltage protection remains lacking.

In some designs, switches activate an overvoltage protection device for a predetermined amount of time. An overvoltage condition may occur if the overvoltage protection device is deactivated prematurely.

US 5,734,256, DE 10 2008 049 705, US 5,285,344, US 2011/215772 and WO 92/17930 all relate to electrical power generation.

### SUMMARY

An overvoltage protection device is provided as defined by claim 1.

A method is also provided as defined by claim 4.

### DESCRIPTION OF THE FIGURES

The various features and advantages of the disclosed examples will become apparent to those skilled in the art from the detailed description. The figures that accompany the detailed description can be briefly described as follows:
FIGURE 1 shows a general schematic view of an example electrical power generating system.
FIGURE 2 shows a schematic view of an overvoltage protection device of the FIGURE 1 system.
FIGURE 3 shows the flow of an example method for protection against overvoltage from a generator in the FIGURE 1 system.

### DETAILED DESCRIPTION

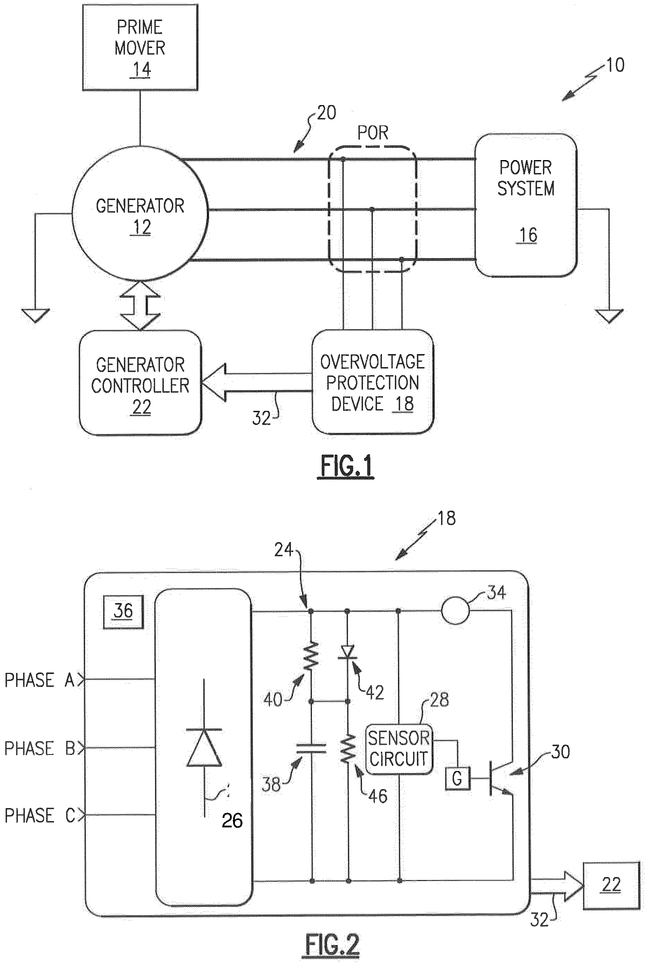

Referring to Figure 1, an example electrical power generating system 10 includes a generator 12 driven by a prime mover 14, such as a gas turbine engine of an aircraft. Other example prime movers include diesel engines, a spark-ignited engine, a natural gas engine, a hybrid engine, or another variety of engine or turbine known in the art.

The generator 12 powers an AC electrical power system 16 or some other type of load. An overvoltage protection device 18 protects the AC electrical power system 16 from overvoltage events associated with power provided by the generator 12.

The example generator 12 is a variable frequency generator that provides a three-phase AC voltage along paths 20. The generator 12 is controlled by a generator controller 22. The generator controller 22 can adjust the generator 12 to produce a higher or a lower AC voltage. During an overvoltage event, a discrete signal may be communicated to the generator controller 22 to change the generator 12 to de-excite.

Referring now to Figure 2 with continuing reference to Figure 1, the paths 20 take the AC voltages (Phase A, Phase B, and Phase C) from the generator 12 to a DC bus 24. A rectifier bridge 26 rectifies the three-phase AC voltages and converts the AC voltage to a DC voltage on the DC bus 24. The example bus is a 235 volt AC bus.

In this example, a sensor circuit 28 is used to measure the DC voltage on the DC bus 24. The sensor circuit 28 is configured to selectively transition a switch 30 between an on-state and an off-state using a gate drive G. The switch 30 is a solid state switch such as a power semiconductor switch in this example.

The switch 30 provides a hard short to the generator 12. The switch 30 also may initiate an exciter off command, which tells the generator controller 22 to turn off a voltage regulator (not shown) of the generator 12.

The example sensor circuit 28 transitions the switch 30 to the on-state. For example, if the sensor circuit 28 detects the DC bus 24 voltage exceeding a threshold value, say 700 volts, the sensor circuit 28 transitions the switch 30 to the on-state to provide a hard short to the generator and absorbs the (voltage) from the DC bus 24 in excess of 700 volts. In this example, a voltage exceeding 700 volts is considered an overvoltage condition because this voltage exceeds the threshold value. The example sensor circuit 28 maintains the switch 30 in the off-state when there is no overvoltage condition.

In the on-state, power flow will be interrupted. The switch 30 thus provides a hard short to the generator 12, which collapses the AC bus voltage. When the switch 30 is transitioned to the on-state, the overvoltage protection device 18 sends an Exciter Off signal to the generator control unit 22 to de-excite the generator 12. The Exciter Off signal moves along path 32.

The example overvoltage protection device 18 includes a DC link current sensor 34 that measures current through the switch 30. In this example, prior to transitioning the switch 30 from the on-state to the off-state, the DC link current sensor 34 verifies that there is no current moving through the switch 30. The example switch 30 is moved back to the off-state only after the verification.

A controller 36 of the overvoltage protection device 18 may be used to control movement of the switch 30 between the off-position and the on-position. The controller 36 receives the current information from the link current sensor 34 before initiating movement of the switch 30 from the on-state to the off-state, for example.

Moving the switch 30 from the on-state to the off-state prematurely may undesirably cause an overvoltage spike. In this example, the movement is premature if any current is moving through the switch 30. Other examples may determine that some small level of current moving through the switch 30 is acceptable.

The example link current sensor 34 is a DC link current sensor. A Hall effect sensor is used as the link current sensor 34 in one example.

The example overvoltage protection device 18 also includes a capacitor 38, a discharge resistor 40, a snubber diode 42, and a bleeder resistor 46. The capacitor 38 is used to filter voltage from the DC bus 24, which smoothes short-period voltage spikes by slowing the rate of change of the voltage. In one example, the capacitor 38 slows the rate of change as the voltage from the DC bus 24 moves from a typical voltage condition to an overvoltage condition. Slowing the rate of change of the voltage provides additional time for the switch 30 to be transitioned to the on-state, thus preventing the protection system from false triggering. The discharge resistor 40 facilitates discharge of energy from the capacitor 38 in a known manner.

In this example, the snubber diode 42 charges the capacitor 38 based on the peak line-to-line AC voltage. Also, the bleeder resistor 46 bleeds stored energy in the capacitor 38 when the overvoltage condition is over and the power system returns to normal.

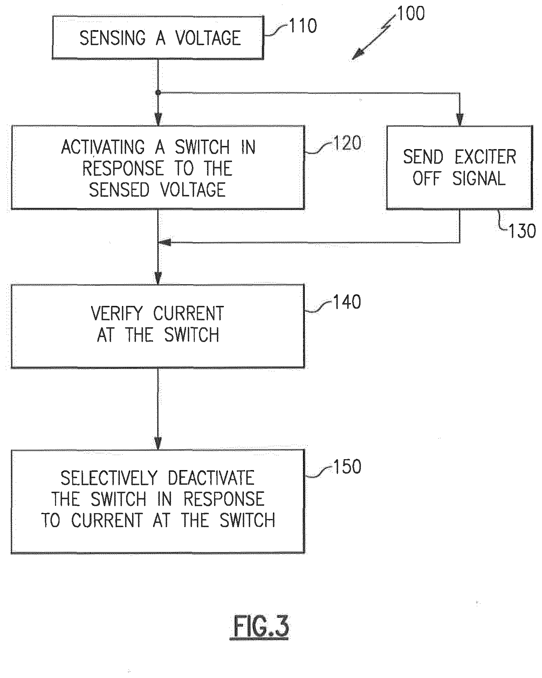

Referring to Figure 3, an example method 100 of accommodating an overvoltage includes sensing a voltage at step 110. The voltage is provided by a generator through a bus in this example. The method 100 then selectively activates a switch to activate a switch at a step 120. The switch is activated in response to the sensed voltage from the step 110. When the switch is activated, an Exciter Off signal is communicated to the generator control unit 22 at a step 130.

The method 100 then measures a current moving through the switch at a step 140. If the current is zero (or some other predetermined level), the method 100 deactivates the switch at a step 150. If the current not zero (or exceeds the predetermined level), the method 100 maintains the switch in an active position.

Features of the disclosed examples include protecting loads from an overvoltage condition due to an early decoupling of a surge protection device.

The preceding description is exemplary rather than limiting in nature. Variations and modifications to the disclosed examples may become apparent to those skilled in the art that do not necessarily depart from the scope of the invention which is defined by the following claims.

## Claims

1. An electrical power system overvoltage protection arrangement, comprising:
a bus (20) ;
a load (16) ; wherein the load is a power system or other type of load ;
a variable frequency generator, VFG, (12) that is configured to provide three-phase AC voltage to the bus (20) being coupled to the load (16);
a generator controller (22) being coupled to the VFG (12) to control the VFG;
an overvoltage protection device (18) ; a short circuit path (32) from the overvoltage protection device (18) to the generator controller (22) ;
the overvoltage protection device (18) including a rectifier bridge (26) coupled between the bus (20) and a DC bus (24) and configured to rectify the three-phase AC voltage and to convert the three-phase AC voltage to a DC voltage ;
a sensor circuit (28) configured to detect the DC bus (24) voltage exceeding a threshold value;
a controller (36) ;
and further including a
switch (30) coupled to the DC bus (24) and configured to transition back-and-forth between an off-state to an on-state, the switch (30) in the on-state completing the short circuit path (32) to the VFG (12) to absorb the DC voltage in excess of the threshold value by sending an Off signal to the generator controller (22) to de-excite the generator (12); and
a DC link current sensor (34) configured to measure current through the switch (30) and to provide a current reading of current through the switch (30) to the controller (36);
the sensor circuit (28) is configured to transition the switch (30) from the off-state to the on-state in response to a variation of the DC voltage, the controller (36) is configured to transition the switch (30) from the on-state to the off-state to deactivate the overvoltage protection device, in response to a current reading from the DC link current sensor.

2. The electrical power system overvoltage protection arrangement of claim 1, wherein the VFG (12) is powered by a gas turbine engine.

3. The electrical power system overvoltage protection arrangement of claim 1, wherein the current reading is a zero current reading.

4. A method of accommodating an overvoltage using an arrangement of any preceding claim, comprising:
sensing the DC voltage;
selectively activating the surge protection device in response to the sensed voltage; and
selectively deactivating the surge protection device in response to the current through the sensor measured by the DC link current sensor (34), wherein the surge protection device is selectively activated by transitioning the switch between an on-state and an off-state, wherein
the switch is transitioned from the on-state, in which the switch provides a short-circuit path to the generator connected to the device, to the off-state in response to a current reading from the DC link current sensor.

## Patentansprüche

1. Überspannungsschutzanordnung für ein elektrisches Stromversorgungssystem, umfassend:
einen Bus (20);
eine Last (16); wobei die Last ein Stromversorgungsnetz oder eine andere Art von Last ist; einen Generator mit variabler Frequenz, VFG, (12), der zum Bereitstellen von dreiphasiger Wechselspannung an dem mit der Last (16) gekoppelten Bus (20) konfiguriert ist;
eine Generatorsteuerung (22), die zum Steuern des VFG mit dem VFG (12) gekoppelt ist;
eine Überspannungsschutzvorrichtung (18); einen Kurzschlusspfad (32) von der Überspannungsschutzvorrichtung (18) zu der Generatorsteuerung (22);
wobei die Überspannungsschutzvorrichtung (18) eine Gleichrichterbrücke (26) beinhaltet, die zwischen dem Bus (20) und einem Gleichstrombus (24) gekoppelt ist und zum Gleichrichten der dreiphasigen Wechselspannung und zum Umwandeln der dreiphasigen Wechselspannung in eine Gleichspannung konfiguriert ist;
eine Sensorschaltung (28), die zum Erkennen konfiguriert ist, dass die Spannung des Gleichstrombusses (24) einen Schwellenwert überschreitet;
eine Steuerung (36);
und ferner umfassend einen Schalter (30), der an den Gleichstrombus (24) gekoppelt ist und zum Hin- und Herschalten zwischen einem Aus-Zustand und einem Ein-Zustand konfiguriert ist, wobei der Schalter (30) in dem Ein-Zustand den Kurzschlusspfad (32) zu dem VFG (12) schließt, um die über dem Schwellenwert liegende Gleichspannung durch Senden eines Aus-Signals an die Generatorsteuerung (22) zum Aberregen des Generators (12) zu absorbieren; und
einen Zwischenkreisgleichstromsensor (34), der zum Messen des Stroms durch den Schalter (30) und zum Bereitstellen eines Strommesswerts des Stroms durch den Schalter (30) an der Steuerung (36) konfiguriert ist;
wobei die Sensorschaltung (28) als Reaktion auf eine Schwankung der Gleichspannung zum Überführen des Schalters (30) von dem Aus-Zustand in den Ein-Zustand konfiguriert ist, die Steuerung (36) als Reaktion auf einen Strommesswert von dem Zwischenkreisgleichstromsensor zum Überführen des Schalters (30) von dem Ein-Zustand in den Aus-Zustand konfiguriert ist, um die Überspannungsschutzvorrichtung zu deaktivieren.

2. Überspannungsschutzanordnung für ein elektrisches Stromversorgungssystem nach Anspruch 1, wobei der VFG (12) durch ein Gasturbinentriebwerk angetrieben ist.

3. Überspannungsschutzanordnung für ein elektrisches Stromversorgungssystem nach Anspruch 1, wobei der Strommesswert ein Nullstrommesswert ist.

4. Verfahren zum Aufnehmen einer Überspannung unter Verwendung einer Anordnung nach einem der vorhergehenden Ansprüche, umfassend:
Erfassen der Gleichspannung;
selektives Aktivieren der Überspannungsschutzvorrichtung als Reaktion auf die erfasste Spannung; und
selektives Deaktivieren der Überspannungsschutzvorrichtung als Reaktion auf den Strom durch den Sensor, der von dem Zwischenkreisgleichstromsensor (34) gemessen wird, wobei die Überspannungsschutzvorrichtung durch Überführen des Schalters zwischen einem Ein-Zustand und einem Aus-Zustand selektiv aktiviert wird, wobei
der Schalter als Reaktion auf einen Strommesswert von dem Zwischenkreisgleichstromsensor von dem Ein-Zustand, in dem der Schalter einen Kurzschlusspfad zu dem an die Vorrichtung angeschlossenen Generator bereitstellt, in den Aus-Zustand überführt wird.

## Revendications

1. Agencement de protection contre les surtensions d'un système d'alimentation électrique, comprenant:
un bus (20);
une charge (16); dans lequel la charge est un système électrique ou un autre type de charge; un générateur de fréquence variable, VFG, (12) qui est configuré pour fournir une tension alternative triphasée au bus (20) couplé à la charge (16);
un dispositif de commande de générateur (22) couplé au VFG (12) pour commander le VFG;
un dispositif de protection contre les surtensions (18); un chemin de court-circuit (32) depuis le dispositif de protection contre les surtensions (18) jusqu'au dispositif de commande de générateur (22);
le dispositif de protection contre les surtensions (18) comportant un pont redresseur (26) couplé entre le bus (20) et un bus CC (24) et configuré pour redresser la tension alternative triphasée et pour convertir la tension alternative triphasée en tension continue;
un circuit de capteur (28) configuré pour détecter la tension du bus CC (24) dépassant une valeur seuil;
un dispositif de commande (36);
et comportant également un commutateur (30) couplé au bus CC (24) et configuré pour effectuer une transition aller-retour entre un état bloqué et un état passant, le commutateur (30) à l'état passant complétant le chemin de court-circuit (32) vers le VFG (12) pour absorber la tension continue dépassant la valeur seuil en envoyant un signal d'arrêt au dispositif de commande de générateur (22) pour désexciter le générateur (12); et
un capteur de courant de liaison CC (34) configuré pour mesurer le courant à travers le commutateur (30) et pour fournir une lecture de courant du courant à travers le commutateur (30) au dispositif de commande (36);
le circuit de capteur (28) est configuré pour faire passer le commutateur (30) de l'état désactivé à l'état passant en réponse à une variation de la tension continue, le dispositif de commande (36) est configuré pour faire passer le commutateur (30) de l'état passant à l'état éteint pour désactiver le dispositif de protection contre les surtensions, en réponse à une lecture de courant provenant du capteur de courant de liaison CC.

2. Agencement de protection contre les surtensions du système d'alimentation électrique selon la revendication 1, dans lequel le VFG (12) est alimenté par un moteur à turbine à gaz.

3. Agencement de protection contre les surtensions du système d'alimentation électrique selon la revendication 1, dans lequel la lecture de courant est une lecture de courant nul.

4. Procédé pour gérer une surtension à l'aide d'un agencement selon une quelconque revendication précédente, comprenant:
la détection de la tension continue;
l'activation sélective du dispositif de protection contre les surtensions en réponse à la tension détectée; et
la désactivation sélective du dispositif de protection contre les surtensions en réponse au courant traversant le capteur mesuré par le capteur de courant de liaison CC (34), dans lequel le dispositif de protection contre les surtensions est activé sélectivement en faisant passer le commutateur entre un état activé et un état désactivé, dans lequel
le commutateur passe de l'état passant, dans lequel le commutateur fournit un chemin de court-circuit au générateur connecté au dispositif, à l'état désactivé en réponse à une lecture de courant provenant du capteur de courant de liaison CC.
